# EUROPÄISCHE PATENTSCHRIFT

(11) **EP 2 382 025 B1**
(45) Veröffentlichungstag und Bekanntmachung des Hinweises auf die Patenterteilung: **05.09.2012**
(21) Anmeldenummer: 09756669.9
(22) Anmeldetag: 05.11.2009
(51) Int. Cl.: B01D 39/16

(54) **EIN- ODER MEHRLAGIGES FILTERMATERIAL UND VERFAHREN ZU DESSEN HERSTELLUNG**
SINGLE OR MULTI-LAYER FILTER MATERIAL AND METHOD FOR THE PRODUCTION THEREOF
MATÉRIAU FILTRANT MONOCOUCHE OU MULTICOUCHE ET SON PROCÉDÉ DE FABRICATION

(30) Priorität: 29.01.2009 DE 102009006584
(43) Veröffentlichungstag der Anmeldung: 02.11.2011
(73) Patentinhaber: Neenah Gessner GmbH, 83052 Bruckmühl (DE)
(72) Erfinder: HÖRL, Werner, 83620 Feldkirchen-Westerham (DE); NIENTIEDT, Jürgen, 83109 Großkarolinenfeld (DE); KAHL, Ulrike, 83052 Bruckmühl (DE)
(74) Vertreter: Bauer, Friedrich
(86) Internationale Anmeldenummer: PCT/EP2009/007934
(87) Internationale Veröffentlichungsnummer: WO 2010/085992

(56) Entgegenhaltungen:
- WO-A-03/104284
- US-A- 3 347 391
- US-A- 4 515 848
- US-A1- 2006 277 877

## Beschreibung

### Gebiet der Erfindung

Die Erfindung betrifft imprägnierte Filtermaterialien, die weder bei der Verarbeitung noch beim Gebrauch Phenol oder Formaldehyd in die Umwelt freisetzen, daraus hergestellte Filterelemente sowie ein Verfahren zur Herstellung eines Filtermaterials.

### Hintergrund der Erfindung

Filtermaterialien für den Automobilbereich und industrielle Anwendungen bestehen in der Regel aus Zellulose und/oder Synthesefasern. Sie werden hauptsächlich zur Filtration von Kraftstoffen, Ölen, Gasen, Wasser und Gemischen daraus eingesetzt. Dabei werden hohe Anforderungen bezüglich Berstfestigkeit und Steifigkeit im nassen und im trockenen Zustand gestellt. Außerdem sollen sie aggressiven Umgebungsbedingungen und hohen Temperaturen widerstehen.

Als Basismaterial für diese Filter werden poröse Bahnen aus Zellulose, Glasfasern, Synthesefasern oder einer Mischung aus diesen verwendet. Da sich die Auswahl der geeigneten Faserarten hauptsächlich an den Anforderungen nach der Porosität, Luftdurchlässigkeit und Dichte des erzeugten Filtermaterials orientiert, sind die ausgewählten Faserarten in Bezug auf die Festigkeit meist nicht optimal.

Um dennoch die benötigte Festigkeit und Steifigkeit besonders im nassen Zustand zu erreichen und die Filtermaterialien beständig gegen aggressive Einflüsse auch bei hohen Temperaturen zu machen, werden sie mit einem Bindemittel behandelt. Als geeignete Bindemittel haben sich seit vielen Jahren Phenolresolharze oder Phenolnovolakharze, letztere in Verbindung mit Hexamethylentetramin oder anderen Formaldehydspendern (z.B.Resol, methylolgruppenhaltige Polymere) als Härter, bewährt. Ein Beispiel für solch ein Phenolharzsystem ist in der Druckschrift EP 94165 A2 beschrieben.

Zum Einsatz kommen diese Harzsysteme als Lösungen, mit denen die porösen Bahnen aus Zellulose und/oder Synthesefasern getränkt und anschließend getrocknet werden. Geeignete Lösemittel sind niedrige Alkohole und Ketone wie z.B. Methanol, Ethanol, Isopropanol, Aceton aber auch Wasser.

Während des Trocknens kommt es zur teilweisen Härtung des Harzes, die über die Höhe der Trocknungstemperatur und die Dauer der Trocknung gesteuert wird. Durch den eingestellten Härtungsgrad wird eine gewisse Anfangsfestigkeit des Filtermaterials erreicht, die für dessen Weiterverarbeitung notwendig ist. Besonders wichtig ist die Anfangsfestigkeit, wenn das Filtermaterial in Längsrichtung rilliert ist. Es muss steif genug sein, dass die Rillierung bestehen bleibt, darf aber auch nicht zu spröde sein, damit es bei der Weiterverarbeitung, z.B. beim Falten, bricht. Allerdings lässt sich die Härtungsreaktion nicht leicht steuern und das Harz wird meist zu stark gehärtet. Das Filtermaterial kann somit spröde werden. Zur Herstellung von Filterelementen wird das Filtermaterial meist geprägt und zu einem Faltenbalg gefaltet. Filtermaterial, das einen zu hohen Härtungsgrad aufweist, ist spröde und bricht leicht während dieses Verarbeitungsschrittes.

Nach dem Vorgang des Prägen und Faltens wird der Faltenbalg in einen Härtungsofen gegeben, um das Harz vollständig auszuhärten. Dadurch wird die für die Anwendung notwendige Festigkeit und Steifigkeit sowohl im trockenen als auch im nassen Zustand erreicht und das Filtermaterial wird beständig gegen aggressive Einflüsse bei hohen Temperaturen. Sowohl während des Trocknens nach dem Tränken der porösen Bahn mit dem Harz, als auch beim Aushärten des Harzes nach Herstellung des Faltenbalges, werden beträchtliche Mengen an gesundheitsschädlichem Phenol und Formaldehyd in die Umwelt freigesetzt. Das Phenol und ein Teil des Formaldehyds sind als Verunreinigung im Harz selbst enthalten. Der größte Teil des Formaldehyds wird allerdings bei der Vernetzungsreaktion als Reaktionsprodukt frei.

Es wurden daher in der Vergangenheit Anstrengungen unternommen, Phenolharze durch phenol- und formaldehydfreie Bindemittel zu ersetzen. Als Ersatz für Phenolharze werden im zunehmenden Maße Kunstharzdisperionen auf wässriger Basis verwendet, meist Acrylatharze. Diese Dispersionen enthalten von Hause aus kein freies Phenol und oft kein gebundenes oder freies Formaldehyd. Allerdings müssen diese Binder zum Erreichen der benötigten Festigkeit und Steifigkeit besonders im nassen Zustand und zur Beständigkeit gegen aggressive Einflüsse wie z.B. heißes Motorenöl, gehärtet werden. Die Härtung geschieht thermisch meist mittels reaktiver Gruppen, die sich im Grundgerüst der Kunstharzpolymere befinden. Eine gängige reaktive Gruppe zur thermischen Vernetzung ist N-methylolacrylamid, die allerdings bei der Vernetzungsreaktion wieder Formaldehyd abspaltet. Ein weiterer Nachteil bei der Verwendung von Kunstharzdispersionen als Bindemittel für Filtermaterialien ist die Eigenschaft dieser Bindemittel, schon während des Trocknens Filme zu bilden. Die Filme überbrücken als sogenannte Segel die Abstände zwischen zwei oder mehreren Fasern und reduzieren damit die Porendurchmesser und somit die Durchlässigkeit für das zu filtrierende Medium. Diese negative Eigenschaft macht sich umso stärker bemerkbar, je höher der Bindemittelanteil im Filtermaterial ist. Phenolharze dagegen bilden auf Grund der deutlich geringeren Kettenlänge ihrer Moleküle keine Filme beim Trocknen aus und reduzieren daher auch nicht die Durchlässigkeit für das zu filtrierende Medium. Die chemische und mechanische Stabilität solcher Filtermedien, welche mit solchen Kunstharzdispersionen imprägniert wurden, sind im Vergleich zu phenolharzimprägnierten Filtermedien schlechter und meist ungenügend für die Anwendungen in Kraftstoffen und Ölen.

Eine weitere Möglichkeit, ein Filtermaterial herzustellen, das keinerlei Phenol und Formaldehyd in die Umgebung abgibt, ist die Verwendung von Epoxidharz. Epoxidharz enthält ebenfalls herstellungsbedingt kein freies Phenol und Formaldehyd. Auch bei den verschiedenen Vernetzungsreaktionen wird kein Formaldehyd abgespalten und in die Umgebung abgegeben. Epoxidharzsysteme haben aber bei der Imprägnierung und anschließenden Trocknung erhebliche Nachteile gegenüber Phenolharzsystemen. Epoxidharze benötigen zum Aushärten immer einen Härter. Hier gibt es im Wesentlichen zwei Typen: kalt und heiß vernetzende Härter. Epoxidharzimprägnierungen mit ausschließlich kalt vernetzenden Härtern können jedoch unter Umständen so schnell reagieren, dass das Filtermaterial nach der Trocknung bereits vollständig ausgehärtet ist oder binnen Stunden bei Raumtemperatur aushärtet. Das Filtermaterial ist dadurch spröde und lässt sich nur unter erschwerten Bedingungen weiterverarbeiten. Das Prägen und Falten ist nur mehr schwer möglich.

Epoxidharzimprägnierungen mit ausschließlich heiß vernetzenden Härtern reagieren deutlich langsamer als Phenolharzsysteme. Um einen für die Weiterverarbeitung benötigten Härtungsgrad zu erreichen, muss das Filtermedium mit der Epoxidharzimprägnierung deutlich länger im Trockner verweilen als ein mit Phenolharz imprägniertes Filtermaterial. Aus diesen Gründen werden Epoxidharzimprägnierungen für Filtermaterialien bisher nur sehr selten eingesetzt.

Das Dokument US 2006/277877 A1 beschreibte in Verfahren zur Herstellung eines Filtermaterials, bei dem Fasern mit einem Bindemittel aus Epoxidharz und einem Härtemittel imprägniert und danach durch Erhitzen ausgehärtet werden.

### Zusammenfassung der Erfindung

Aufgabe der Erfindung ist es daher, ein Filtermaterial insbesondere für Kfz- und Industriefilter bereitzustellen, das keinerlei Phenol und Formaldehyd an die Umgebung abgibt und das ausgezeichnete Eigenschaften insbesondere bezüglich Filtrationseigenschaften, Beständigkeit gegen aggressive Einflüsse auch bei hohen Temperaturen, Festigkeit und Steifigkeit im trockenen und nassen Zustand sowie bezüglich einer guten Weiterverarbeitung aufweist. Weiterhin soll ein verbessertes Filterelement sowie ein einfach zu handhabendes Verfahren zur Herstellung des Filtermaterials geschaffen werden.

Diese Aufgabe wird erfindungsgemäß durch die Merkmale des Anspruchs 1, 10 und 15 gelöst. Vorteilhafte Ausführungsformen der Erfindung sind in den weiteren Ansprüchen beschrieben.

### Detailierte Beschreibung der Erfindung, Ausführungsbeispiele

Das erfindungsgemäße Filtermaterial besteht aus einem porösen, faserigen Flächengebilde und einem Bindemittel in Form einer Epoxidharzimprägnierung, die durch eine Kombination eines kaltvernetzenden Härters und eines heißvernetzenden Härters eine stufenweise Aushärtung ermöglicht. "Kaltvernetzend" bedeuted hierbei, dass der Härter erst ab einer bestimmten Temperatur, die relativ niedrig sein kann, in jedem Fall jedoch niedriger ist als bei dem heißvernetzenden Härter, zu vernetzen beginnt. Der Vernetzungsbeginn des kaltvernetzenden Härters kann beispielsweise unter 0°C, insbesondere zwischen ca. 0°C und ca. 100°C, liegen. Der Vernetzungsbeginn des "heißvernetzenden" Härters liegt bei höheren Temperaturen, insbesondere bei 130°C oder höher. Unterhalb dieser höheren Temperaturen findet keine Vernetzung durch den heißvernetzenden Härter statt. Durch die Verwendung von phenol- und formaldehydfreien Substanzen sowie der Verwendung von Härtern, die während der Vernetzungsreaktion kein Formaldehyd abspalten, gibt das erfindungsgemäße Filtermaterial zu keiner Zeit Phenol oder Formaldehyd in die Umgebung ab.

Die Imprägnierung besteht vorteilhafterweise aus einem Epoxidharz mit zwei oder mehr Epoxidgruppen aus der Reihe der Bisphenole A und F und/oder den Glycidylethern dieser Bisphenole sowie der aliphatischen Epoxidharze mit zwei oder mehreren Epoxidgruppen. Es ist in niederen Alkoholen und Ketonen wie z. B. Methanol, Ethanol, Isopropanol und Aceton in beliebigen Verhältnissen löslich. Dem Epoxidharz werden mindestens zwei verschiedene Härtertypen zugegeben.

Der erste Härtertyp ist ein kaltvernetzender Härter. Die Zugabemenge ist unterstöchiometrisch bezogen auf das Epoxidharz, bevorzugt 30 - 80% des stöchiometrischen Verhältnisses und besonders bevorzugt 50% des stöchiometrischen Verhältnisses. Die Menge dieses Härters wird vorzugsweise so gewählt, dass das erfindungsgemäße Filtermedium bereits nach dem Trocknen so weit ausgehärtet ist, dass es für die Weiterverarbeitung genügend Festigkeit besitzt, jedoch noch flexibel genug ist, damit es bei der Weiterverarbeitung ohne zu brechen geprägt, zu einem Faltenbalg gefaltet oder mit Wellen, die quer zur Materialbahn verlaufen, versehen werden kann.

Der zweite Härtertyp ist ein heißvernetzender Härter. Die Zugabemenge ist unterstöchiometrisch bezogen auf das Epoxidharz, bevorzugt 30 - 80% des stöchiometrischen Verhältnisses und besonders bevorzugt 50% des stöchiometrischen Verhältnisses. Dieser Härter reagiert vorzugsweise ab 130°C, besonders bevorzugt ab 150°C, und entwickelt seine Wirkung erst dann, wenn der Faltenbalg bereits völlig ausgestaltet in den Härtungsofen kommt.

Bevorzugte Härter des ersten Typs sind aliphatische Härter (z.B. Polyamidoamine, Polyamide), modifizierte aliphatische Härter, cycloaliphatische aminische Härter, aromatische Amine, Ketimine und Säureanhydride.

Bevorzugte Härter des zweiten Typs sind stickstoffhaltige Härter wie z.B. Dicyandiamid, Guanamine, Guanidine, Cyanamin, Triazine, Triazole, Cyanamide oder Imidazole. Besonders bevorzugt ist Dicyandiamid und Mischungen von Dicyandiamid mit Beschleunigern wie z.B. Imidazolen.

Die Endhärtung, die im Wesentlichen durch den zweiten Härtertyp erreicht wird, verleiht dem Filtermedium die geforderte Festigkeit und Steifigkeit im nassen und im trockenen Zustand und eine gute Beständigkeit gegenüber aggressiven Einflüssen. Beispiele für aggressive Einflüsse, die auf Filtermaterialien einwirken, sind heißes Motorenöl von ca. 150°C oder heißer Kraftstoff von ca 80 °C. Additive in diesen Flüssigkeiten erhöhen deren Aggressivität noch zusätzlich. Beim Vergleich eines erfindungsgemäßen Filtermaterials mit einem identischen, jedoch mit Phenolharz imprägnierten Vergleichsmaterial hat sich überraschend herausgestellt, das das erfindungsgemäße Filtermaterial eine deutlich höhere Beständigkeit gegenüber heißem Motoröl, heißer Luft, Ad Blue, Kraftstoffen wie Diesel und Biodiesel und anderen flüssigen und gasförmigen zu filtrierenden Stoffen besitzt als das phenolharzimprägnierte Filtermaterial. Alle anderen physikalischen und filtertechnischen Werte sind bei beiden Materialien vergleichbar (siehe Tabelle 1).

Das poröse Flächengebilde des erfindungsgemäßen Filtermaterials kann z.B. durch das Nasslegeverfahren, das Luftlegeverfahren, das Meltblown-Verfahren oder das Spinnvliesverfahren hergestellt werden. Außerdem kann es aus einem offenporigen Schaum bestehen.

Unter dem Nasslegeverfahren wird das übliche Verfahren zur Erzeugung von Papieren verstanden, bei dem eine Suspension von Kurzschnittfasern mit Wasser hergestellt wird und diese Suspension, die zusätzlich noch die zur Papierherstellung üblichen Hilfsmittel enthalten kann, auf einem Sieb verteilt und entwässert wird. Das so gebildete poröse Flächengebinde wird anschließend getrocknet und aufgewickelt.

Beim Luftlegeverfahren werden die Kurzschnittfasern in einem Luftstrom verwirbelt und ebenfalls auf einem Sieb abgelegt. Anschließend wird das poröse Flächengebilde mittels Vernadeln, Wasserstrahlvernadel, Hitzeanwendung, usw. verfestigt und aufgewickelt.

Beim Spinnvliesverfahren wird ein thermoplastisches Polymer in einem Extruder aufgeschmolzen und durch eine Spinndüse gedrückt. Die in den Kapillaren der Spinndüse gebildeten Endlosfasern werden nach Austritt aus der Düse verstreckt, in einem Ablagekanal verwirbelt und auf einem Siebband bahnförmig abgelegt. Anschließend wird das Vlies mit einem Prägekalander unter Anwendung von Druck und Temperatur verfestigt.

Beim Meltblown - Verfahren wird ein thermoplastisches Polymer in einem Extruder aufgeschmolzen und durch eine Spinndüse gedrückt. Die in den Kapillaren der Spinndüse gebildeten Endlosfasern werden nach Austritt aus der Düse mit heißer Luft verstreckt und auf einem Siebband bahnförmig abgelegt.

Polymere für das Meltblown - und Spinnvliesverfahren sind vorzugsweise Polyolefine, Polyester, Polyamide, Polyphenylensulfid, Polycarbonat oder Copolymere oder Mischungen davon.

Geeignete Fasern für den Nasslege- und Luftlegeprozess sind z.B. Zellulose, Regeneratzellulose, Polyesterfasern, Polyolefinfasern, Polyamidfasern, Multikomponentenfasern, Glasfasern, Kohlefasern.

Die erfindungsgemäßen Filtermaterialien haben je nach Einsatzzweck typischerweise eine Flächenmasse nach DIN EN ISO 536 von 10 - 400 g/m², eine Luftdurchlässigkeit nach DIN EN ISO 9237 von 2 - 10000 1/m²s und eine Dicke nach DIN EN ISO 534 von 0,1 - 5,0 mm.

Das erfindungsgemäße Filtermaterial kann sowohl ein- als auch mehrlagig sein, wobei mindestens eine Lage mit der erfindungsgemäßen Epoxidharzimprägnierung behandelt ist.

Als Imprägnierverfahren kommen alle gängigen Verfahren wie z.B. Tauchimprägnierung, ein- oder beidseitiger Walzenauftrag oder Sprühauftrag in Frage.

### Beispiel 1

Papier mit einer Flächenmasse von 100 g/m² und einer Luftdurchlässigkeit von 860 1/m²s wurde auf einer Schrägsiebpapiermaschine hergestellt, auf dem Laborfoulard imprägniert und im Umlufttrockenofen 15 min bei 80 °C getrocknet. Die Imprägnierung erfolgte mit einer Mischung aus
10 g Epoxidharz Araldit GY 250 der Firma Huntsman
2 g Härter 1 SIQ Amin 2030 der Firma S.I.Q
2 g Härter 2 Dicyandiamid der Firma Alzchem
0,5 g Beschleuniger 2-Methylimidazol der Firma BASF
100 g Methanol

Der Gehalt an Imprägniermittel betrug 19 Gew.% bezogen auf die flächenbezogene Masse des imprägnierten Mediums. An diesem Medium wurde dann die Berstfestigkeit, die Luftdurchlässigkeit, die flächenbezogene Masse, die Biegesteifigkeit nass längs, die Biegesteifigkeit trocken längs, das Rücktrocknungsverhalten, die Heißölbeständigkeit, das Nachverzunderungsverhalten und die Phenol- und Formaldehydemission gemessen. Die Ergebnisse sind in Tabelle 1 dargestellt.

### Vergleichsbeispiel

Papier aus Beispiel 1 wurde unter gleichen Bedingungen wie im Beispiel 1 mit einem Standard-Phenolharz folgender Rezeptur imprägniert:
10 g Phenolharz 3195 der Firma Dynea
100 g Methanol

Der Gehalt an Imprägniermittel betrug 19 Gew.% bezogen auf die flächenbezogene Masse des imprägnierten Mediums. An diesem Medium wurde dann die Berstfestigkeit, die Luftdurchlässigkeit, die flächenbezogene Masse, die Biegesteifigkeit nass längs, die Biegesteifigkeit trocken längs, das Rücktrocknungsverhalten, die Heißölbeständigkeit, das Nachverzunderungsverhalten und die Phenol- und Formaldehydemission gemessen. Die Ergebnisse sind in Tabelle 1 dargestellt.
Luftdurchlässigkeit nach DIN EN ISO 9237
Berstfestigkeit nach Mullen nach DIN EN ISO 2758
Flächenbezogene Masse nach DIN EN ISO 536
Biegesteifigkeit trocken und nass nach Schlenker nach DIN 53864

### Heißölbeständigkeit

Zur Bestimmung der Beständigkeit gegen heißes Motoröl wird das Filtermaterial 10 Minuten bei 165 °C im Umluftofen gehärtet. Dann wird das gehärtete, flache Filtermaterial 3 Wochen lang bei 150 °C im Motorenöl Shell Helix Ultra 5W30 gelagert und anschließend weitere 24 Stunden im Normklima gemäß DIN EN ISO 20187 konditioniert. Schließlich wird die Berstfestigkeit nach DIN EN ISO 2758 am gealterten Filtermaterial bestimmt und mit der Berstfestigkeit des nicht gealterten Filtermaterials verglichen.

### Nachverzunderungsverhalten

Die zu prüfenden Probe wird für 24 Stunden bei 160°C im Umluftofen gelagert. Nach Klimatisierung nach DIN EN ISO 20187 wird die Berstfestigkeit nach DIN EN ISO 2758 bestimmt.

### Rücktrocknungsverhalten

Zunächst wird an der nach DIN EN ISO 20187 klimatisierten Probe die Luftdurchlässigkeit nach DIN EN ISO 9237 bestimmt. Die Probe wird dann 10 Minuten in destilliertes Wasser gelegt und anschließend zwischen zwei Löschkartons 5 Sekunden lang abgelöscht. Danach erfolgt wiederum die Messung der Luftdurchlässigkeit nach DIN EN ISO 9237, wobei die Probe so lange im eingeschalteten Gerät verbleibt, bis der ursprüngliche Wert der Luftdurchlässigkeit wieder erreicht ist. Während dieser Zeit wird der Differenzdruck bei 200 Pa gehalten. Sofort nach dem Einlegen der Probe in das Gerät und nach jeweils 30 Sekunden wird der Wert für die Luftdurchlässigkeit abgelesen.

**Bestimmung des Formaldehydgehalts**: Ca. 0,3 g des zu untersuchenden Materials werden in einem Ofen gebracht. Bei 4 min bei 180°C werden mit einem Gasprobennehmer die Emissionen in destilliertem Wasser aufgenommen. Anschließend wird das Formaldehyd kolorimetrisch bestimmt. Hierzu wird die Reaktion des Formaldehyds mit 4-Amino-3-hydrazino-5-mercapto-1,2,4-triazol genutzt (VDI 3862 Blatt 4).

**Bestimmung des Phenolgehalts**: Ca. 0,3 g des zu untersuchenden Materials werden in einen Ofen gebracht. Bei 4 min bei 180°C werden mit einem Gasprobennehmer die Emissionen in verdünnter Natronlauge aufgenommen. Anschließend wird das Phenol kolorimetrisch bestimmt. Hierzu wird die Reaktion des Phenols mit p-Nitroanilin genutzt (VDI 3485).

**Tabelle 1**

| Prüfmerkmal | Beispiel 1 (Erfindung) | Vergleichsbeispiel |
|---|---|---|
| flächenbezogene Masse [g/m²] | 123 | 123 |
| Luftdurchlässigkeit [1/m²s] | 880 | 880 |
| Berstfestigkeit [kPa] | 391 | 321 |
| Biegesteifigkeit mass längs | 6,8 [cNcm²] | 9,3 [cNcm²] |
| Biegesteifigkeit trocken längs | 55 [cNcm²] | 51 [cNcm²] |
| Rücktrocknungsverhalten | 2 Minuten | 5 Minuten |
| Nachverzunderungsverhalten | 462 kPa | 180 kPa |
| Heißölbeständigkeit | 233 [kPa] | 188 [kPa] |
| Phenol-Emission 4 min 180°C | unter der Nachweisgrenze | 2,89 [g/kg Papier] |
| Formaldehyd-Emission 4 min 180°C | unter der Nachweisgrenze | 0,646 [g/kg Papier] |

Die Ergebnisse zeigen deutlich, dass das erfindungsgemäße Filtermaterial (Beispiel 1) deutlich besser ist als das bisher verwendete phenolharzimprägnierte Filtermaterial (Vergleichsbeispiel). Einzig die Biegesteifigkeit nass längs ist beim erfindungsgemäßen Filtermaterial etwas geringer, liegt aber immer noch im für diese Filtermaterialien üblichen Bereich.

## Patentansprüche

1. Ein- oder mehrlagiges Filtermaterial, bei dem mindestens eine aus Zellulose, Glasfasern, Synthesefasern oder einer Mischung hiervon bestehende Lage mit einem Bindemittel getränkt ist, das aus einem Epoxidharz und einem Härtemittel besteht**, dadurch gekennzeichnet, dass** das Härtemittel einen ersten, bei einer niedrigeren Temperatur vernetzenden Härter und einen zweiten, bei einer höheren Temperatur vernetzenden Härter umfasst, so dass das Epoxidharz in Abhängigkeit der Temperatur stufenweise härtbar ist.

2. Filtermaterial nach Anspruch 1, **dadurch gekennzeichne**t, dass der erste Härter ein Härter ist, der ab einer Temperatur von 0°C zu vernetzen beginnt.

3. Filtermaterial nach Anspruch 1, **dadurch gekennzeichnet, dass** der zweite Härter ein Härter ist, der ab einer Temperatur von 130°C zu vernetzen beginnt.

4. Filtermaterial nach einem der vorhergehenden Ansprüche, **dadurch gekennzeichnet, dass** der erste Härter mit 30 - 80% des stöchiometrischen Verhältnisses bezogen auf das Epoxidharz im Bindemittel vorliegt.

5. Filtermaterial nach einem der vorhergehenden Ansprüche, **dadurch gekennzeichnet, dass** der zweite Härter mit 30 - 80% des stöchiometrischen Verhältnisses bezogen auf das Epoxidharz im Bindemittel vorliegt.

6. Filtermaterial nach einem der vorhergehenden Ansprüche, **dadurch gekennzeichnet, dass** der erste Härter ein aus der Reihe der aliphatischen und/oder cycloaliphatischen aminischen Härter stammender Härter ist.

7. Filtermaterial nach Anspruch 6, **dadurch gekennzeichnet, dass** der erste Härter ein Polyamidoamin ist.

8. Filtermaterial nach einem der vorhergehenden Ansprüche, **dadurch gekennzeichnet, dass** der zweite Härter ein stickstoffhaltiger Härter ist.

9. Filtermaterial nach Anspruch 8, **dadurch gekennzeichnet, dass** der zweite Härter ein Dicyandiamid, Guanamin oder Imidazol ist.

10. Filtermaterial nach Anspruch 8, **dadurch gekennzeichnet, dass** der zweite Härter einen Beschleuniger enthält.

11. Filterelement, hergestellt aus einem ein- oder mehrlagigen Filtermaterial nach einem der vorhergehenden Ansprüche.

12. Filterelement nach Anspruch 11, **dadurch gekennzeichnet, dass** das Filtermaterial plissiert ist.

13. Filterelement nach Anspruch 11, **dadurch gekennzeichnet, dass** das Filtermaterial in Längsrichtung rilliert ist.

14. Filterelement nach Anspruch 11, **dadurch gekennzeichnet, dass** das Filtermaterial geprägt ist.

15. Filterelement nach Anspruch 11, **dadurch gekennzeichnet, dass** das Filtermaterial in Querrichtung gewellt ist.

16. Verfahren zur Herstellung eines ein- oder mehrlagigen Filtermaterials, wobei das Verfahren die folgende Schritte aufweist:
a) Herstellen eines in Abhängigkeit der Temperatur stufenweise aushärtbaren Bindemittels, das aus Epoxidharz und einem Härtemittel besteht, das einen ersten, ab einer niedrigeren Temperatur vernetzenden Härter und einen zweiten, ab einer höheren Temperatur vernetzenden Härter umfasst,
b) Tränken mindestens einer Lage des Filtermaterials, die aus Zellulose, Glasfasern, Synthesefasern oder einer Mischung hiervon besteht, mit dem stufenweise aushärtbaren Bindemittel,
c) Vorhärten des Filtermaterials durch Aussetzen des Filtermaterials einer Temperatur, die mindestens der niedrigeren Temperatur entspricht, jedoch unterhalb der höheren Temperatur liegt,
d) Formen der Lage,
e) Aushärten des Filtermaterials durch Aussetzen des Filtermaterials einer Temperatur, die gleich oder höher als die höhere Temperatur ist.

17. Verfahren nach Anspruch 16, **dadurch gekennzeichnet, dass** das Vorhärten des Filtermaterials bei einer Temperatur zwischen 0°C und 120°C durchgeführt wird, während das Aushärten bei Temperaturen ab 130°C durchgeführt wird.

## Claims

1. Single or multi-layer filter material in which at least one layer consisting of cellulose, glass fibres, synthetic fibres or a mixture thereof is impregnated with a binder which consists of an epoxy resin and a hardening agent, **characterised in that** the hardening agent comprises a first hardener cross-linking at a lower temperature and a second hardener cross-linking at a higher temperature, in such a way that the epoxy resin can be hardened stepwise as a function of temperature.

2. Filter material according to claim 1, **characterised in that** the first hardener is a hardener which begins to cross-link from a temperature of 0 °C.

3. Filter material according to claim 1, **characterised in that** the second hardener is a hardener which begins to cross-link from a temperature of 130 °C.

4. Filter material according to any one of the preceding claims, **characterised in that** the first hardener is present in the binder at 30 - 80 % of the stoichiometric ratio based on the epoxy resin.

5. Filter material according to any one of the preceding claims, **characterised in that** the second hardener is present in the binder at 30 - 80 % of the stoichiometric ratio based on the epoxy resin.

6. Filter material according to any one of the preceding claims, **characterised in that** the first hardener is a hardener originating from the group comprising the aliphatic and/or cycloaliphatic amine hardeners.

7. Filter material according to claim 6, **characterised in that** the first hardener is a polyamidoamine.

8. Filter material according to any one of the preceding claims, **characterised in that** the second hardener is a nitrogen-containing hardener.

9. Filter material according to claim 8, **characterised in that** the second hardener is a dicyandiamide, guanamine or imidazole.

10. Filter material according to claim 8, **characterised in that** the second hardener contains an accelerator.

11. Filter element produced from a single or multi-layer filter material according to any one of the preceding claims.

12. Filter element according to claim 11, **characterised in that** the filter element is pleated.

13. Filter element according to claim 11, **characterised in that** the filter material is grooved in the longitudinal direction.

14. Filter element according to claim 11, **characterised in that** the filter material is embossed.

15. Filter element according to claim 11, **characterised in that** the filter material is corrugated in the transverse direction.

16. Method for producing a single or multi-layer filter material, the method comprising the following steps:
a) producing a binder which can be hardened stepwise as a function of temperature and consists of epoxy resin and a hardening agent which comprises a first hardener cross-linking from a lower temperature and a second hardener cross-linking from a higher temperature,
b) impregnating at least one layer of the filter material, which consists of cellulose, glass fibres, synthetic fibres or a mixture thereof, with the binder which can be hardened stepwise,
c) pre-hardening the filter material by exposing the filter material to a temperature which corresponds at least to the lower temperature but is below the higher temperature.
d) shaping the layer,
e) hardening the filter material by exposing the filter material to a temperature which is equal to or higher than the higher temperature.

17. Method according to claim 16, **characterised in that** the step of pre-hardening the filter material is carried out at a temperature between 0 °C and 120 °C, while the hardening step is carried out at temperatures from 130 °C.

## Revendications

1. Matériau filtrant monocouche ou multicouches, dans lequel au moins une couche constituée de cellulose, de fibre de verre, de fibres synthétiques ou d'un mélange de celles-ci est imbibée d'un liant qui est constitué d'une résine époxy et d'un durcisseur, **caractérisé en ce que** le durcisseur comprend un premier durcisseur assurant une réticulation à faible température et un second durcisseur assurant une réticulation à une température plus élevée, de sorte que la résine époxy peut être amenée à durcir par étapes en fonction de la température.

2. Matériau filtrant selon la revendication 1, **caractérisé en ce que** le premier durcisseur est un durcisseur qui commence son effet de réticulation à partir d'une température de 0° C.

3. Matériau filtrant selon la revendication 1, **caractérisé en ce que** le second durcisseur est un durcisseur qui commence son effet de réticulation à partir d'une température de 130° C.

4. Matériau filtrant selon l'une des revendications précédentes, **caractérisé en ce que** le premier durcisseur est présent à raison de 30 à 80 % du rapport stoechiométrique par référence à la résine époxy dans le liant.

5. Matériau filtrant selon l'une des revendications précédentes, **caractérisé en ce que** le second durcisseur est présent à raison de 30 à 80 % du rapport stoechiométrique par référence à la résine époxy dans le liant.

6. Matériau filtrant selon l'une des revendications précédentes, **caractérisé en ce que** le premier durcisseur est un durcisseur provenant de la série des durcisseurs aliphatiques aminés et/ou cyclo-aliphatiques aminés.

7. Matériau filtrant selon la revendication 6, **caractérisé en ce que** le premier durcisseur est une polyamidoamine.

8. Matériau filtrant selon l'une des revendications précédentes, **caractérisé en ce que** le second durcisseur est un durcisseur contenant de l'azote.

9. Matériau filtrant selon la revendication 8, **caractérisé en ce que** le second durcisseur est un dicyandiamide, guanamine ou imidazole.

10. Matériau filtrant selon la revendication 8, **caractérisé en ce que** le second durcisseur contient un accélérateur.

11. Élément filtrant, fabriqué à partir d'un matériau filtrant monocouche ou multicouches selon l'une des revendications précédentes.

12. Élément filtrant selon la revendication 11, **caractérisé en ce que** le matériau filtrant est plissé.

13. Élément filtrant selon la revendication 11, caractérisé ce que le matériau filtrant est rainuré en direction longitudinale.

14. Élément filtrant selon la revendication 11, **caractérisé en ce que** le matériau filtrant est matricé.

15. Élément filtrant selon la revendication 11, **caractérisé en ce que** le matériau filtrant est ondulé en direction transversale.

16. Procédé pour la fabrication d'un matériau filtrant monocouche ou multicouches, ledit procédé comprenant les étapes consistant à :
a) production d'un liant capable de durcir par étapes en fonction de la température, qui est constitué de résine époxy et d'un liant, qui comprend un premier durcisseur assurant une réticulation à partir d'une faible température et un second durcisseur assurant une réticulation à partir d'une température plus élevée,
b) imbiber au moins une couche du matériau filtrant, qui est constituée de cellulose, de fibre de verre, de fibres synthétiques ou d'un mélange de celles-ci, avec le liant capable de durcir par étapes,
c) effectuer un durcissement préalable du matériau filtrant en exposant le matériau filtrant à une température qui correspond au moins à la faible température, mais située au-dessous de la température plus élevée,
d) mise en forme de la couche,
e) effectuer un durcissement du matériau filtrant en exposant le matériau filtrant à une température qui est égale ou supérieure à la température plus élevée.

17. Procédé selon la revendication 16, **caractérisé en ce que** le durcissement préalable du matériau filtrant est effectué à une température entre 0° C et 120° C, tandis que le durcissement est effectué à des températures à partir de 130° C.
